# EUROPEAN PATENT SPECIFICATION

(11) **EP 3 482 659 B1**
(45) Date of publication and mention of the grant of the patent: **27.05.2020**
(21) Application number: 17201600.8
(22) Date of filing: 14.11.2017
(51) Int. Cl.: A47J 31/44, A47J 31/46

(54) **COFFEE MACHINE DRAINAGE CHANNEL**
KAFFEEMASCHINENABLAUFRINNE
CANAL DE DRAINAGE DE MACHINE À CAFÉ

(43) Date of publication of application: 15.05.2019
(73) Proprietor: BSH Hausgeräte GmbH, 81739 München (DE)
(72) Inventor: Ogrizek, Bostjan, 3320 Velenje (SI); Golicnik, Matjaz, 3332 Recica (SI); Schnellinger, Christian, 83379 Wonneberg (DE)

(56) References cited:
- WO-A1-2017/076821
- DE-A1- 3 741 922
- DE-A1- 3 843 702

## Description

### Background of the invention

The present invention relates to a coffee machine having a housing comprising a housing side part and a housing front part, a water tank, a pump, a brewing unit, a heater, a steam relief unit, a drip tray and a drainage channel for draining water from a water compartment to the drip tray.

### State of the art

From the state of the art a different types of brewing machines e.g. automatic coffee machines, drip or capsule coffee makers are known. Those machines employ different systems for preparing beverages such as coffee, tea or chocolate. In such systems the beverage ingredients are used either in a loose form or contained in a container like capsules or cartridges which contain a brewing substance. During the brewing process the capsule is pierced and a portion of hot water passes through in order to prepare a coffee. The machine provides a certain pressure, water flow amount, time duration and temperature.

Typically, brewing machines have a body with removable water tank for clear water, a pump which delivers the water to the heating source and then to the brewing unit. The coffee machine has a drip tray located at the bottom of the machine and adapted to collect the liquid - water or beverage generated during the brewing process during normal use.

The patent application US 2010 071 562 A1 discloses a machine for preparing brewed drinks including a brewing compartment for receiving drink substrate portions and a water supply for supplying a pressurized supply of water into the brewing compartment. The water supply is oriented in the brewing compartment in such that it would spray into a user region of the machine if the brewing compartment opens prematurely. However, a safety valve prevents the supplied water from entering into the brewing compartment when the brewing compartment is open. The document discloses also the diaphragm valve which receives its water supply through a water inlet, which is fitted with a barb-shaped ribbed mouthpiece onto which a flexible hose can be pushed. The hose runs through a hose guide into the interior of the drinks machine.

The patent application EP 13 72 444 A2 discloses a beverage brewer which comprises a storage tank adapted to contain a supply of liquid, and a metering chamber structured and arranged to be filled with a metered amount of liquid received from the storage tank via an inlet in communication therewith. A brewing chamber is structured and arranged to receive a beverage filter cartridge containing a dry beverage medium. A baffle in the storage tank is shiftable from an open position accommodating liquid flow between the storage tank and the metering chamber via its inlet to a closed position preventing such flow and isolating the metering chamber from the storage tank. During a brewing cycle, liquid is delivered from the thus isolated metering chamber to the brewing chamber for combination with the beverage medium contained in the filter cartridge. At the conclusion of the brewing cycle, the baffle is returned to its open position, thereby allowing the metering chamber to be refilled with liquid received from the storage tank via its inlet.

Document DE 37 41 922 A1 discloses a coffee machine having a housing comprising a housing side part and a housing front part, a water tank, a pump, a brewing unit, a heater, a steam relief unit, a drip tray and a drainage channel 102 for draining water from a water compartment 62 to the drip tray 94.

Presented solutions does not provide efficient and reliable means for draining excessive water outside appliance. During the brewing process a great volume of steam and moisture is created which should be drained outside the beverage preparing machine. For this reason a drainage hose is provided. Drainage hoses are made as separate elements assembled with the water outlet on the assembly line. Drainage hoses are made out of flexible material e.g. rubber, silicone or other soft material which features are desirable for that kind of hoses.

Problem which arises during use such elastic drainage pipes is that such pipe is deformable and has to be connected to other parts of the coffee machine during assembling process.

Another problem is that elastic drainage hoses can disassemble during operation of the coffee machine.

Next problem is that such elastic drainage hoses can easily be clogged since material of the hose is elastic and the shape of the hose itself is curved or bent.

### The aim of the invention

It is the object of the present invention to overcome problems associated with drainage hoses in coffee machines as described above and provide reliable and robust solution.

It is the object of the invention is to reduce steam and moisture volume inside the device to protect its internal components from the detrimental effect caused by the vapour and humidity existence.

Another object of the invention is to decrease the number of coffee machine parts, therefore decrease the assembling time.

### Summary of the invention

These objects are solved by a coffee machine drainage channel whereby the drainage channel is formed by a main profile of the housing front part and a covering profile of the housing side part.

A coffee machine is a device designed for performing a brewing process. The coffee machine comprises many elements like housing, water tank, brewing unit, heater, steam relief unit, a drip tray etc. In the coffee machine cartridge type there is a cartridge container for receiving a disc like capsules with different brewing substances to be infused with hot water e.g. ground coffee, instant coffee, tea, powdered chocolate, milk and the like. During the brewing process the capsule is pierced and a portion of hot water passes through in order to prepare a hot beverage. The machine provides a certain pressure, water flow amount, time duration and temperature which allows to prepare different kind of drinks. The cartridge type coffee machines have a storage chamber for receiving the disc near which the water compartment is situated. The water compartment is a part of the housing front part and is provided to gather the excessive liquid which can come from steam generated during the brewing process or appeared if the brewing process is not performed properly or simply water spilled by the user. It is desired to drain the collected water outside the coffee machine. For this purpose the drainage channel is provided.

According to the invention the coffee machine housing consists of two main parts: a housing front part and a housing side part. The drainage channel is formed by a main profile designed on the housing front part and a covering profile placed on the housing side part. Both, the main profile and the covering profile are gutter shaped. The drainage channel according to the invention drains the excessive liquid from the water compartment to the drip tray of the coffee machine from where water is removed automatically by a drainage system or by the user manually. The draining process is performed thanks to the gravity force.

It is to be understood that both the foregoing general description and the following detailed description are exemplary, and are intended to provide further explanation of the invention as claimed. Other advantages and features of the invention will be apparent from the following description, drawings and claims.

### Preferred embodiment of the invention

In the preferred embodiment of the invention the main profile is integrally built in the housing front part of the coffee machine which means that the main profile can be produced as separate part and connected with the housing front part permanently. The positive effect is that the risk of disassembling of the drainage channel during operation is eliminated. The channel is rigid and durable therefore a possibility of its failure or damage is greatly reduced in comparison to the flexible drainage channels.

In another embodiment of the invention the covering profile is integrally build in the housing side part of the coffee machine which means that the covering profile can be manufactured as a separate part or fixedly connected to the housing side part of the coffee machine. The advantage of such solution is that stiffness of the covering profile is responsible for reliability and durability of the drainage channel.

In another embodiment of the invention the main profile has a main drainage channel form and the covering profile has a covering drainage channel form. The main profile is the main part of the drainage channel and the covering profile is the covering part for the main part of the drainage channel. The main profile and the covering profile connected together create a simple shaped drainage channel.

In the preferred embodiment of the invention the main profile and the housing front part are formed in one piece, and the covering profile and the housing side part are formed in one piece what means that the main profile and the housing front part are produced as one part in one injection moulding process. Respectively, the covering profile and the housing side part are one piece and are produced integrally in one moulding injection process.

Another embodiment discloses a coffee machine where the main profile has at least two walls and the covering profile has at least two protrusions. Walls of the main profile are tightly connected with protrusions of the covering profile. The positive effect is that after connecting the walls of the main profile with protrusions of the covering profile the drainage channel is created automatically and the waste water can be drained from the water compartment. Walls can be connected with protrusions simply by snapping or just well-fitted. The advantage of such connection is that any additional means like glue is needed, therefore the assembling process is much easier and assembly time is greatly reduced.

In a favourable embodiment of the invention the drainage channel extends vertically or under angle which allows natural flow of the water from the water compartment to the drip tray of the coffee machine. Water draining is performed thanks to the gravity effect. The excessive liquid flows naturally downward from the outlet of the water compartment to the drip tray of the coffee machine. The positive effect is that the draining process is spontaneous and do not require any action from the user. The drainage channel can drain the water collected in the water compartment without additional force, only using the gravity effect.

In another embodiment of the invention the drainage channel is automatically generated during the coffee machine assembling process. The drainage channel is automatically generated by connecting the two housing parts, namely housing main part and the housing side part together into which the parts of the drainage channel is built in. The advantage is that no additional tube is needed so the assembly time and the number of parts are reduced. Additional positive effect is that such solution is more reliable in comparison to the flexible hoses acting as a drainage channel. Water, vapour and moisture which have deteriorating effect to the coffee machine elements are removed from the coffee machine housing.

The present invention provides a simple and cheap two parts drainage channel build in the coffee machine housing which is responsible for reducing the steam and moisture volume inside the coffee machine. The drainage channel is created automatically during assembling process so the assembling time is greatly reduced.

### Brief description of the drawings

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
- Fig. 1: exemplary shows a coffee machine isometric view;
- Fig. 2: shows a cross section of a housing front part and a housing side part assembled together;
- Fig. 3: shows a housing front part inner side;
- Fig. 4: shows a housing side part inner side;
- Fig. 5: shows a drainage channel upper side;
- Fig. 6: shows the coffee machine with a water compartment in isometric view.

### Detail description of the invention

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

Typically, coffee machines have a housing comprising a coffee grinder, a removable water reservoir, a pump, a brewing unit, a heater, a steam relief unit, a milk frothing unit and a coffee outlet. Moreover such coffee machines are provided also with sensors, valves to automate the brewing process for achieving the repetitive outcome. Such coffee machines can have also an automatic or manually operated drainage system for waste water and other fluids disposal.

Clear, cold water from the water reservoir is delivered by the pump to the heater which heats the water to the desirable brewing temperature. Then the hot water is forcing by the pressure to go through ground coffee beans or cartridge with previously prepared brewing substance and flows through the coffee outlet to the cup.

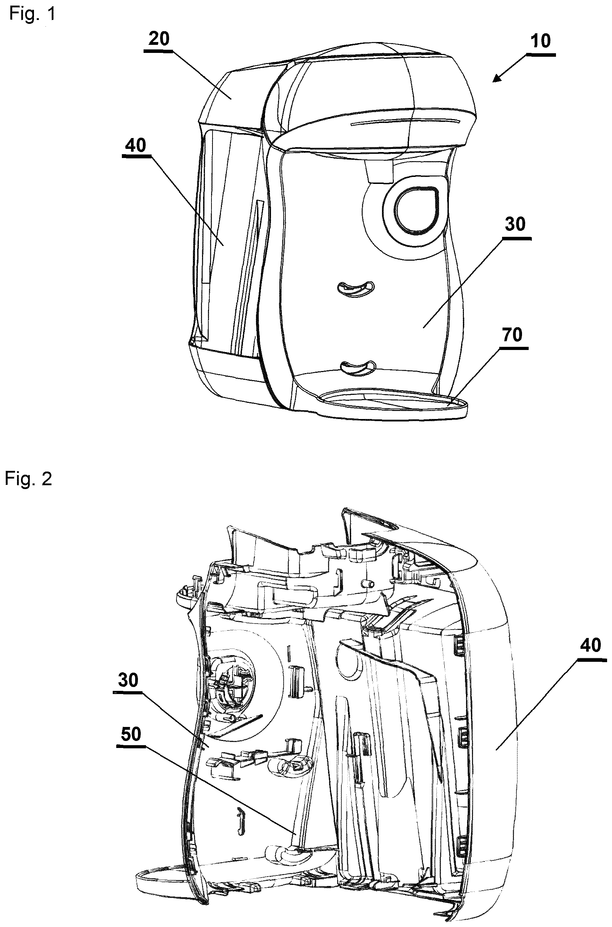

Fig. 1 shows an isometric view of a coffee machine 10 with a housing front part 30 and a housing side part 40. At the top of the coffee machine 10 a cartridge area is provided for receiving a disc with substance to be brewed and a water compartment which function as a safety area in case the disc is damaged during operation. The second function of the water compartment is to collect condensed water coming from the steam generated during the brewing process or to collect water in case it is spilled by the carefulness customer.

The coffee machine 10 is equipped with a removable water tank and many components like a pump, a brewing unit, a heater, a steam relief unit, a milk frothing unit, sensors, valves etc. which are not shown on the figure but existence of which is necessary to carry out the brewing process.

Fig. 2 shows a housing front part 30 assembled with a housing side part 40 cross section. The housing front part 30 and the housing side part 40 are assembled together to form the complete coffee machine housing 20. After assembling the drainage channel 50 is automatically generated.

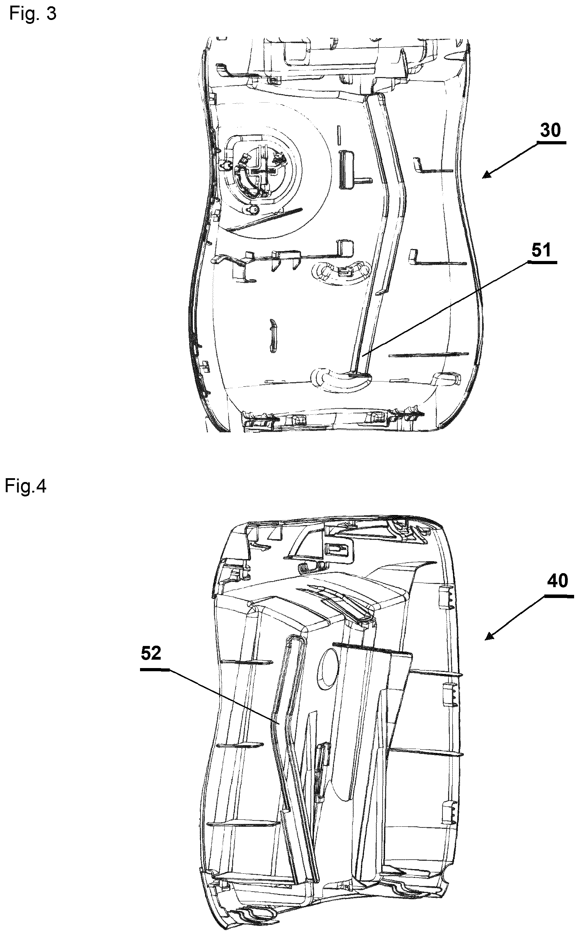

Fig. 3 shows a housing front part 30 inner side with the main profile 51 of the drainage channel 50. The drainage channel 50 extends from the water compartment 60 placed at the top of the coffee machine 10 towards a drip tray 70 located at the bottom of the coffee machine 10. The drainage channel 50 is vertically positioned to allow the liquid to freely flow down the drainage channel 50. The main profile 51 of the drainage channel 50 is built in the housing front part 30 and is produced as one piece.

Fig. 4 shows inner side of a housing side part 40. The housing side part 40 is equipped with a covering profile 52 of the drainage channel 50. The covering profile 52 is built in the housing side part 40. The shape of the covering profile is designed in such a way to provide efficient draining process.

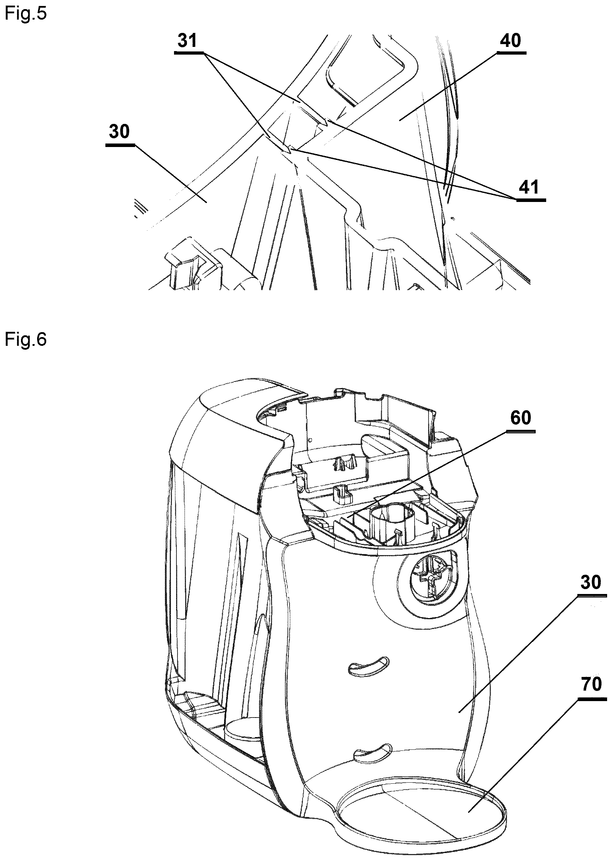

Fig. 5 shows a drainage channel 50 upper side. The drainage channel 50 is created during assembly of the housing front part 30 and the housing side part 40. Walls 31 of the housing front part 30 are tightly connected with protrusions 41 of the housing side part 40 and generates the drainage channel with rectangular cross-section. The diameter of the drainage channel 50 is designed in such a way to provide long lasting no clogging time of operation of the coffee machine 10. A brewed substance could get into the drainage channel 50 what can be caused by the cartridge damage or carefulness of the customer during operation. Nevertheless the drainage channel 50 shape and smoothness allows uninterrupted operation of the coffee machine 10.

Fig. 6 shows the coffee machine 10 with a water compartment 60 in isometric view. The water compartment 60 is situated at the top of the coffee machine 10. The function of the water compartment 60 is to collect water from steam generated during brewing process, water spilled by the user or liquid and other contamination coming from damaged cartridge.

The present invention provides a simple and cheap two parts drainage channel build in the coffee machine housing which is responsible for reducing the steam and moisture volume inside the coffee machine. The drainage channel is created automatically during assembling process so the assembling time is greatly reduced.

### LIST OF REFERENCE SIGNS

- 10: coffee machine

- 20: housing

- 30: housing front part
- 31: wall

- 40: housing side part
- 41: protrusion

- 50: drainage channel
- 51: main profile
- 52: covering profile

- 60: water compartment

- 70: drip tray

## Claims

1. A coffee machine (10) having a housing (20) comprising a housing side part (40) and a housing front part (30), a water tank, a pump, a brewing unit, a heater, a steam relief unit, a drip tray (70) and a drainage channel (50) for draining water from a water compartment (60) to the drip tray (70) **characterized in that** the drainage channel (50) is formed by a main profile (51) of the housing front part (30) and a covering profile (52) of the housing side part (40).

2. The coffee machine (10) according to claim 1, **characterized in that** the main profile (51) is integrally built in the housing front part (30) of the coffee machine (10).

3. The coffee machine (10) according to claim 1 or 2, **characterized in that** the covering profile (52) is integrally build in the housing side part (40) of the coffee machine (10).

4. The coffee machine (10) according to any of preceding claims, **characterized in that** the main profile (51) has a main drainage channel form and the covering profile (52) has a covering drainage channel form.

5. The coffee machine (10) according to any of preceding claims, **characterized in that** the main profile (51) and the housing front part (30) are formed in one piece, and the covering profile (52) and the housing side part (40) are formed in one piece.

6. The coffee machine (10) according to any of preceding claims, **characterized in that** the main profile (51) has at least two walls (31) and the covering profile (52) has at least two protrusions (41).

7. The coffee machine (10) according to any of preceding claims, **characterized in that** walls (31) of the main profile (51) are tightly connected with protrusions (41) of the covering profile (52).

8. The coffee machine (10) according to any of preceding claims, **characterized in that** the drainage channel (50) extends vertically from the water compartment (60) to the drip tray (70) of the coffee machine (10).

9. The coffee machine (10) according to any of preceding claims, **characterized in that** the drainage channel (50) is automatically generated during the coffee machine (10) assembling process.

10. The coffee machine (10) according to any of preceding claims, **characterized in that** the drainage channel (50) is automatically generated by connecting the housing side part (40) to the housing front part (30).

## Patentansprüche

1. Kaffeemaschine (10) mit einem Gehäuse (20), das einen Gehäuseseitenteil (40) und einen Gehäusevorderteil (30) umfasst, einem Wassertank, einer Pumpe, einer Brüheinheit, einer Heizvorrichtung, einer Dampfentspannungseinheit, einer Tropfschale (70) und einer Ablaufrinne (50) zum Ablaufenlassen von Wasser aus einer Wasserkammer (60) zur Tropfschale (70), **dadurch gekennzeichnet, dass** die Ablaufrinne (50) von einem Hauptprofil (51) des Gehäusevorderteils (30) und einem Abdeckprofil (52) des Gehäuseseitenteils (40) gebildet wird.

2. Kaffeemaschine (10) nach Anspruch 1, **dadurch gekennzeichnet, dass** das Hauptprofil (51) in den Gehäusevorderteil (30) der Kaffeemaschine (10) integriert ist.

3. Kaffeemaschine (10) nach Anspruch 1 oder 2, **dadurch gekennzeichnet, dass** das Abdeckprofil (52) in den Gehäuseseitenteil (40) der Kaffeemaschine (10) integriert ist.

4. Kaffeemaschine (10) nach einem der vorhergehenden Ansprüche, **dadurch gekennzeichnet, dass** das Hauptprofil (51) eine Hauptablaufrinnenform und das Abdeckprofil (52) eine die Ablaufrinne abdeckende Form aufweist.

5. Kaffeemaschine (10) nach einem der vorhergehenden Ansprüche, **dadurch gekennzeichnet, dass das** Hauptprofil (51) und der Gehäusevorderteil (30) einstückig ausgebildet sind und das Abdeckprofil (52) und der Gehäuseseitenteil (40) ebenfalls.

6. Kaffeemaschine (10) nach einem der vorhergehenden Ansprüche, **dadurch gekennzeichnet, dass** das Hauptprofil (51) mindestens zwei Wände (31) und das Abdeckprofil (52) mindestens zwei Vorsprünge (41) aufweist.

7. Kaffeemaschine (10) nach einem der vorhergehenden Ansprüche, **dadurch gekennzeichnet, dass** Wände (31) des Hauptprofils (51) fest mit den Vorsprüngen (41) des Abdeckprofils (52) verbunden sind.

8. Kaffeemaschine (10) nach einem der vorhergehenden Ansprüche, **dadurch gekennzeichnet, dass** die Ablaufrinne (50) von der Wasserkammer (60) aus vertikal zur Tropfschale (70) der Kaffeemaschine (10) verläuft.

9. Kaffeemaschine (10) nach einem der vorhergehenden Ansprüche, **dadurch gekennzeichnet, dass** die Ablaufrinne (50) bei der Montage der Kaffeemaschine (10) automatisch entsteht.

10. Kaffeemaschine (10) nach einem der vorhergehenden Ansprüche, **dadurch gekennzeichnet, dass** die Ablaufrinne (50) durch Verbinden des Gehäuseseitenteils (40) mit dem Gehäusevorderteil (30) automatisch entsteht.

## Revendications

1. Machine à café (10) ayant un boîtier (20) comprenant une partie latérale de boîtier (40) et une partie avant de boîtier (30), un réservoir d'eau, une pompe, une unité de percolation, un élément chauffant, une unité d'évacuation de vapeur, un bac d'égouttage (70) et un canal de drainage (50) pour drainer de l'eau d'un compartiment à eau (60) au bac d'égouttage (70) **caractérisée en ce que** le canal de drainage (50) est formé par un profilé principal (51) de la partie avant de boîtier (30) et un profilé de recouvrement (52) de la partie latérale de boîtier (40).

2. Machine à café (10) selon la revendication 1, **caractérisée en ce que** le profilé principal (51) est construit de manière solidaire dans la partie avant de boîtier (30) de la machine à café (10).

3. Machine à café (10) selon la revendication 1 ou 2, **caractérisée en ce que** le profilé de recouvrement (52) est construit de manière solidaire dans la partie latérale de boîtier (40) de la machine à café (10).

4. Machine à café (10) selon l'une quelconque des revendications précédentes, **caractérisée en ce que** le profilé principal (51) possède une forme de canal de drainage principal et le profilé de recouvrement (52) possède une forme de canal de drainage de recouvrement.

5. Machine à café (10) selon l'une quelconque des revendications précédentes, **caractérisée en ce que** le profilé principal (51) et la partie avant de boîtier (30) sont formés d'une seule pièce, et le profilé de recouvrement (52) et la partie latérale de boîtier (40) sont formés d'une seule pièce.

6. Machine à café (10) selon l'une quelconque des revendications précédentes, **caractérisée en ce que** le profilé principal (51) possède au moins deux parois (31) et le profilé de recouvrement (52) possède au moins deux saillies (41).

7. Machine à café (10) selon l'une quelconque des revendications précédentes, **caractérisée en ce que** les parois (31) du profilé principal (51) sont reliées de manière intime aux saillies (41) du profilé de recouvrement (52).

8. Machine à café (10) selon l'une quelconque des revendications précédentes, **caractérisée en ce que** le canal de drainage (50) s'étend verticalement du compartiment à eau (60) au bac d'égouttage (70) de la machine à café (10).

9. Machine à café (10) selon l'une quelconque des revendications précédentes, **caractérisée en ce que** le canal de drainage (50) est automatiquement généré au cours du processus d'assemblage de la machine à café (10).

10. Machine à café (10) selon l'une quelconque des revendications précédentes, **caractérisée en ce que** le canal de drainage (50) est automatiquement généré par la liaison de la partie latérale de boîtier (40) à la partie avant de boîtier (30).
